# EUROPEAN PATENT APPLICATION

(11) **EP 3 739 259 A1**
(43) Date of publication of application: **18.11.2020**
(21) Application number: 19173987.9
(22) Date of filing: 13.05.2019
(51) Int. Cl.: F21V 8/00, F21S 43/245, F21S 43/31, F21V 5/00, F21V 7/00, G09F 13/04

(54) **OPTICAL SYSTEM FOR HOMOGENOUS SURFACE ILLUMINATION**

(71) Applicant: HELLA Saturnus Slovenija d.o.o., 1000 Ljubljana (SI)
(72) Inventor: SMITEK, Petra, 4294 Krize (SI); BERKOPEC, Bostjan, 8351 Straza (SI); CIGALE, Tilen, 1370 Logatec (SI)
(74) Representative: Jersan, Tatjana

(57) **Abstract**

The proposed optical system for homogenous surface illumination refers to homogeneous illumination of a decorative surface and/or a signal function, for example for signal function on a vehicle, for example illumination of vehicle emblems and/or radoms. Advantage of the proposed invention is small number of light sources with regard to the surface size that needs to be illuminated and the possibility to custom design the optical system according to specific surface geometries that needs to be illuminated. The proposed optical system uses an optical lens which has its inner surface formed of in-coupling elements and of spherical elements which are separated one from another by flat surfaces. In the proposed combination the in-coupling elements are used to gather the light, i.e. the optical rays, emitted by the light source into a parallel rays of light and to direct said parallel rays of light to the outer surface of the optical lens, i.e. to the first reflective surface, from where the rays are reflected to the spherical elements and to the flat surfaces, i.e. to the second reflective surface, wherein the light is guided through the optical lens material and diffused evenly in all directions.

## Description

The invention refers to an optical system for homogenous surface illumination. Within automotive car industry there are more and more demands for homogeneously lighted logos, which are part of a specific light function or part of a welcome light. The homogeneous illumination of certain geometry, for example of a certain logo, is usually not feasible with classic optic concepts due to the lack of space on the given geometry. Besides that, with classic optic concepts the light sources are inevitably visible from the front or side views.

The proposed optical system for homogenous surface illumination refers to homogeneous illumination of a decorative surface and/or a signal function, especially for signal function on a vehicle, for example illumination of vehicle emblems and/or radoms, with a purpose of an additional light contributor or just an autonomous decorative function.

Advantage of the proposed invention is small number of light sources with regard to the surface size that needs to be illuminated and the possibility to custom design the optical system according to specific surface geometries that needs to be illuminated. The proposed optical system uses an optical lens which has its inner surface formed of in-coupling elements and of spherical elements which are separated one from another by flat surfaces. In the proposed combination the in-coupling elements are used to gather the light, i.e. the optical rays, emitted by the light source into a parallel rays of light and to direct said parallel rays of light to the outer surface of the optical lens, i.e. to the first reflective surface, from where the rays are reflected to the spherical elements and to the flat surfaces, i.e. to the second reflective surface, wherein the light is guided through the optical lens material and diffused evenly in all directions.

The possible visibility of the hot spots from the light sources may be prevented by the use of an additional non-transparent layer. The advantage of using the non-transparent layer with the optical system is the possibility to easily adapt the system to the customer and stylist's request, for example to different logo shapes.

The proposed optical system can be used with one or more light sources, which can be positioned symmetrical or non-symmetrical on the whole system. The proposed optical system does not require a concentric geometry around the light sources, which means that the geometry of the surface, which emits light, and thus the geometry of the optical lens, may be arbitrary and asymmetrical.

### Prior art

In EP patent No. 1005619 a bireflective lens element is disclosed wherein the secondary reflective area includes the plurality of facets extending inwardly into the second reflective area for intercepting light from the primary reflective area and redirecting the light toward the illumination surface. The facets each include a substantially parabolic surface for directing light from the primary reflective area outwardly away from the bireflective lens element to the illumination surface to achieve efficient surface illumination.

In US patent No. 7021805 the vehicle lamp equipped with a LED including a normal reflection section and an internal reflection section which, when used in conjunction with a plurality of reflection elements, are operable to control reflection and the outgoing light. The reflection elements formed on the rear surface of an optical lens are arranged at equal intervals and in a form of a saw-toothed pattern in a plane orthogonal to the optical axis.

In CN utility model No. 203797516U a round light guide device, for example a headlight is disclosed. The round light guide device comprises a round-plate-shaped light-emitting surface, a round-plate shaped reflecting surface and a light source, wherein the round-plate-shaped light reflecting surface is formed at the bottom of the light-emitting surface, and the light source is located below the center of the reflecting surface. The reflecting surface is formed in a form of a saw-toothed pattern.

In US patent No. 7052482 a light guide member is disclosed, for example to illuminate the meter, wherein the secondary reflection surface is constructed by reflection stripes such as many grooves with straight sides widened in a concentric circle shape.

The documents found in prior art are referring to improvements in lens elements where the light from the light source (LED) is directed through the primary reflective surface and the secondary reflective surface as parallel rays to the illumination surface without the loss of intensity. The secondary reflective surface is in a form of a saw-toothed pattern. The design is rotationaly symetric, i.e. a concentric geometry around the light sources is required. If a uniform and efficient illumination of the surface is required the light source has to be in the center of the surface.

In the present invention with the proposed optical system the concentric geometry around the light sources is not required. With the proposed design of the optical system the light emitted from the light source is diffused through the optical lens material and the surface is uniformly illuminated regardless of the position of the light source. One or plurality of light sources can be positioned arbitrary relative to the surface to be illuminated and thus the surface to be illuminated may be of any shape. With the use of the spherical shape elements on the inner surface of the lens as proposed in the present invention, a homogeneity look from different directions is achieved, while saw-shaped pattern concepts provide homogeneous look only from certain direction.

The invention is further described below and presented in figures:

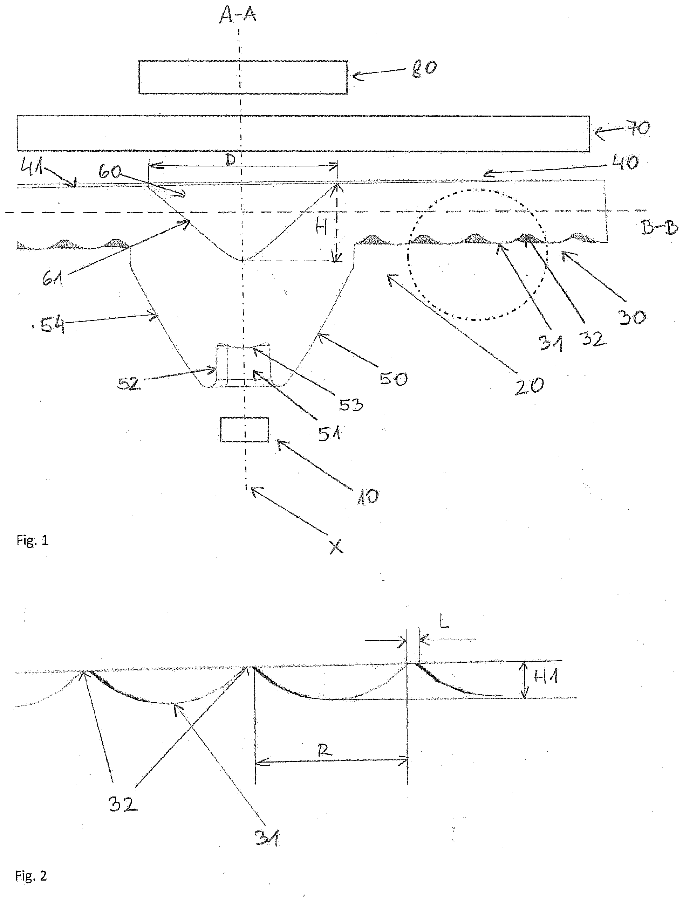

Fig. 1 presents a cross-section of the optical system of the invention
Fig. 2 presents an enlarged view of the area within the circle in Fig. 1

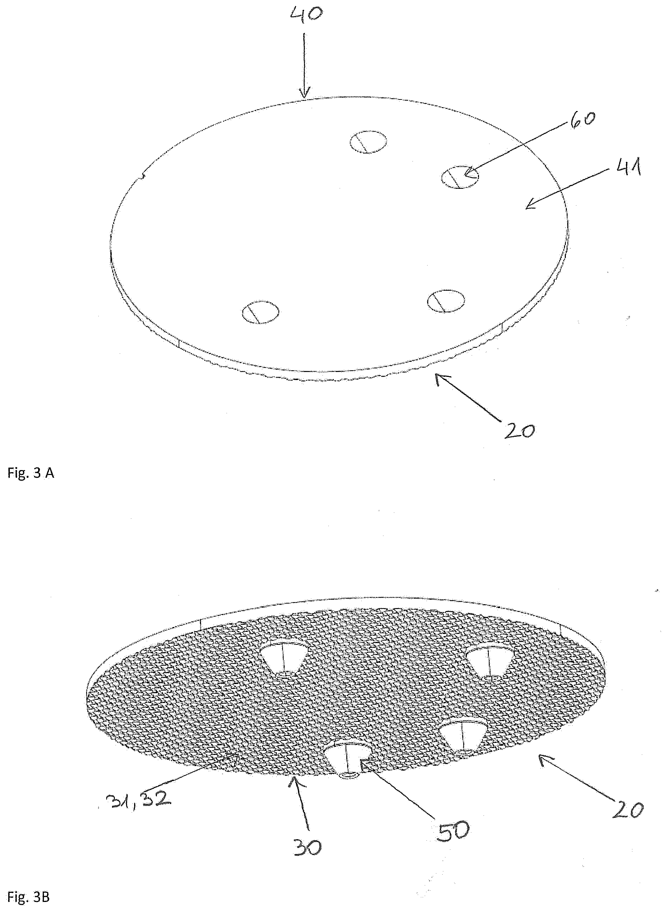

Fig. 3 presents one embodiment of the optical lens, wherein A is the upper surface of the optical lens and B is the inner surface of the optical lens

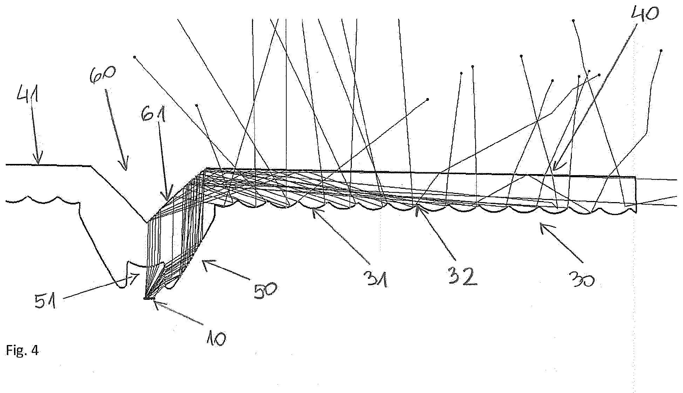

Fig. 4 presents a simulated sketch of the rays passing the optical system
Fig. 5 presents exploded view of the logo with the optical system integrated into the housing.

An optical system for homogenous surface illumination comprises
- at least one light source 10 and
- an optical lens 20 with an inner surface 30 and an outer surface 40, wherein said optical lens 20 comprises at least one in-coupling element 50 which is positioned above said at least one light source 10 and is integrated in said optical lens 20 on its inner surface 30, wherein
said outer surface 40 is formed as a predominantly flat surface 41 with at least one recess 60, which is located above said at least one in-coupling element 50 and wherein a lateral surface 61 of the recess 60 forms a first reflective surface;
the inner surface 30 of the optical lens 20, apart the surface where the in-coupling element 50 is integrated on the inner surface 30, is formed of spherical elements 31 which are separated one from another by flat surfaces 32,
wherein said flat surface 41 and the surfaces of the spherical elements 31 and the flat surfaces 32 form further reflective surfaces, wherein part of the light hitting the flat surface 41 passes through the flat surface 41 into the exterior of the lens,
wherein the centres of the at least one recess 60, the at least one in-coupling element 50 and the at least one light source 10 are located on the same optical axis X and wherein
the flat surface 41 and the flat surfaces 32 are predominantly parallel to one another.

In the context of this application the inner surface 30 of the optical lens 20 is referring to the surface which is facing towards the light source 10 and the outer surface 40 of the optical lens 20 is referring to the surface which is facing away from the light source 10.

Light source 10 emits the light in all frontal directions. Suitable light source 10 can be a laser diode, a halogen and a xenon or LED source. In the case of a LED source it can be a single or multi-chip LED.

The optical lens 20 can be made of either any plastic material transparent for visible light for example PMMA or PC, or of glass.

The in-coupling element 50 is axially symmetrical with respect to the optical axis X, wherein its dimensions and shape are adapted to the light source 10 and the refracting index of the material used for the optical lens 20. The function of the in-coupling element 50 is similar as a collimator, i.e. to gather the light, i.e. the optical rays, emitted by the light source 10, into a parallel rays of light and to direct said parallel rays of light to the lateral surface 61 of the recess 60, i.e. to the first reflective surface.

The in-coupling elements 50 are positioned above the light sources 10 and are integrated in the optical lens 20 on its inner surface 30 in places that are determined according to the dimensions and shape of the object to be homogeneously illuminated. This means that based on the dimensions and the shape of the object to be homogeneously illuminated the preferred number and positions of the light sources 10 is defined and based on the defined number and positions of the light sources 10, the in-coupling elements 50 are integrated in the optical lens 20 on its inner surface 30 in so predefined places.

The main purpose of the in-coupling element 50 is to redirect light from the light source 10 in parallel light beam to the lateral surface 61 of the recess 60, so known in-coupling elements which enable said function may be used.

In a preferred embodiment the in-coupling element 50 may be in a form of a truncated cone, with a cavity 51 at the bottom part of the in-coupling element 50, i.e. the part which is facing towards the light source 10. The cavity 51 is symmetrical with respect to the optical axis X and is preferably in a form of a truncated cone with the upper inner surface 53 in the form of a convex surface and with the inner side surface 52 slightly inclined inwardly relative to the optical axis X.

The outer surface 54 of the in-coupling element 50 is formed convexly. The in-coupling element 50 redirects most of the light from the light source 10 directly and parallel upwards toward the recess 60 and thus to the first reflective surface. The designs of the inner side surface 52, the upper inner surface 53 and the outer side surface 54 of the in-coupling element 50 are interdependent and depend also on parameters, such as the height of the in-coupling element 50, the distance of the light source 10, the radius of the in-coupling element 50, etc. They are defined according to specific surface geometries that needs to be illuminated and in a way that with combination of all, a parallel light beam to the first reflective surface is achieved.

The outer surface 40 of the optical lens 20 is formed as a predominantly flat surface 41 with at least one recess 60 wherein the lateral surface 61 of the recess 60 represents the first total reflective surface. The recess 60 is positioned above the light source 10 and above the in-coupling element 50 so that the centers of the recess 60, the in-coupling element 50 and the light source 10 are located on the same optical axis X which is perpendicular to the object to be homogeneously illuminated. The parallel rays of light formed with the in-coupling element 50 are reflected by the first reflective surface 61 toward further reflective surfaces, i.e. toward the flat surface 41 and toward the surfaces of the spherical elements 31 and the flat surfaces 32, from where the rays of light are then reflected between the further reflective surfaces through the optical lens material. Part of the rays hitting the flat surface 41 passes through the flat surface 41 into the exterior of the lens.

The recess 60 is designed in a way to redirect the parallel rays of light on the further reflective surfaces of the optical lens 20 as much as possible.

The recess 60 is symmetrical with respect to the optical axis X and has a circular shape in B-B plane cross section. In one embodiment the recess 60, in A-A plane cross section, may be essentially of a triangular shape, wherein two sides of said shape, which face in interior of the optical lens 20, may be inwardly or outwardly bent.

In another embodiment the recess 60, in the A-A plane cross section, may be of a triangular shape with straight sides.

The size of the lateral surface 61 of the recess 60 depends on the depth H and the diameter D of the recess 60 at the outer surface 40 of the optical lens 20 and is defined in each case according to the in-coupling element/s 50 used and/or according to the dimensions and the shape of the object to be homogeneously illuminated. This means that based on the dimensions and the shape of the object to be homogeneously illuminated, the number, the position and the type of the light sources 10 and the in-coupling elements 50 are defined, and according to the defined in-coupling elements 50, the dimensions of the recesses 60 and thus the size of the lateral surface 61 of the recess 60 is defined.

The inner surface 30 of the optical lens 20, apart the surface where the in-coupling elements 50 are integrated, is formed of spherical elements 31 which are separated one from another by flat surfaces 32. The spherical elements 31 are in a form of convex or concave shape of sphere, wherein the height H1 and the radius R of each of the spherical elements 31 may be the same or different along the inner surface 30 of the optical lens 20.

The distance between the individual spherical elements 31, i.e. the length L of the flat surfaces 32, may be the same or different along the inner surface 30 of the optical lens 20. The length L of the flat surface 32 in the context of this application is referring to the distance between the centres of the two adjacent spherical elements 31 reduced by the radii R of the two adjacent spherical elements 31.

The parameters, i.e. the convex or concave shape of the spherical elements 31, the height H1 and the radius R of the spherical elements 31 and the length L of the flat surfaces 32 are selected and defined according to the dimensions and the shape of the object to be homogeneously illuminated.

In one embodiment the inner surface 30 of the optical lens 20 is formed of spherical elements 31 of convex shape and of flat surfaces 32 which separate spherical elements 31 one from another, wherein the spherical elements 31 are of the same height H1 and radius R and wherein the flat surfaces 32 are of the same length L, along the inner surface 30 of the optical lens 20.

In another embodiment the inner surface 30 of the optical lens 20 is formed of spherical elements 31 of convex shape and of flat surfaces 32 which separate spherical elements 31 one from another, wherein the height H1 and the radius R of the spherical elements 31 increases along the inner surface 30 of the optical lens 20 with the distance of the spherical elements 31 from the in-coupling elements 50 and wherein the length L of the flat surfaces 31 decreases along the inner surface 30 of the optical lens 20 with the distance of the spherical elements 31 from the in-coupling elements 50.

Optionally the inner surface 30 of the optical lens, apart the in-coupling element/s 50, may be surface treated, for example by metallization or graining in order to have better light efficiency. In case of metallization no light is lost in downward direction. In case of graining, the homogeneity of the optical system is improved. The chosen option of the surface treatment depends on the whole system, requirements, power of the light source etc.

The flat surface 41 may optional include additional optical elements, for example optical prisms, pillows or similar elements for controlled spread of the light, or the flat surface 41 may optionally be surface treated by graining, for additional light spread. Only the flat surface 41 of the lens 20 may include additional optical elements or may be surface treated, recess/es 60 are to be excluded.

Optionally the optical system may include a diffusive lens 70 placed above the optical lens 20, for additional light spread which increase homogeneity of the system. The diffusive lens 70 may be placed above the whole optical lens 20, however due to the cost reduction, its size may be reduced and defined with regard to the shape of the geometry that needs to illuminate. Since the purpose of this lens 70 is to increase homogeneity, said effect is improved if the distance between the optical lens 20 and the diffusive lens 70 is greater, however with the greater distance more light is lost. Therefore the optimal position of said diffusive lens 70 needs to be defined for every use of the optical system separately.

Optionally the optical system may additionally include a layer 80 which is non-transparent for visible light. Said non-transparent layer 80 is shaped and positioned above the outer surface 40 of the optical lens 20 in places to prevent direct visibility of the light source 10, i.e. to cover the hot spots. Preferably said layer 80 is in a form of a "black print", and which enables the plotting of a form of a logo (or any other preferable shape of the geometry that needs to illuminate) and simultaneously hiding hotspots. Preferably said non-transparent layer 80 is placed on the cover lens 90.

If a diffusive lens 70 and a non-transparent layer 80 are used simultaneously, said diffusive lens 70 is positioned between the optical lens 20 and the non-transparent layer 80.

The construction of the optical lens 20 allows the light sources 10 and thus the in-coupling elements 50 and recesses 60 to be arranged symmetrically or asymmetrically throughout the entire surface of the optical lens 20. The construction of the optical lens 20, i.e. the number, the position and the form of the in-coupling elements 50, the form of the recesses 60 and the shape and the position of the optional non-transparent layer 80 is always defined according to the dimensions and shape of the object to be homogeneously illuminated. The construction of the optical lens 20 thus enables the custom design of the optical system for homogenous surface illumination.

The light passes through the system in a following way:
The light source 10 emits light into the in-coupling element 50 and further on the optical lens 20, which redirects light from the light source 10 into the desired direction through the optical lens material and thus the outer surface 40 of the optical lens 20 is homogeneously illuminated. The in-coupling element 50 on optical lens 20 gathers emitted rays from the light source 10 in parallel rays of light in the most effective way, similar as a collimator, and directs said parallel rays of light to the first reflective surface of the optical lens 20, i.e. to the lateral surface 61. Said parallel rays of light hit the first reflective surface 61 where the total reflection occurs and the rays of light are redirected toward further reflective surfaces, i.e. toward the flat surface 41 and toward the surfaces of the spherical elements 31 and the flat surfaces 32, from where the rays of light are then further reflected between said further reflective surfaces through the optical lens material. Part of the rays hitting the flat surface 41 passes through the flat surface 41 into the exterior of the lens. The result is evenly illuminated surface 41, which is visible as a homogeneous light emitting surface (looking from any direction or standing point of the viewer). The exception is part directly above the light source 10 where the light passes directly through the optical lens 20 and creates hot spots. This is due to the use of non-ideal light source. Namely LED is not a point source of light and most of the light is redirected by the total reflection however some light passes directly through the optical lens 20 and creates hot spots. The hotspots of light sources 10 may be covered with the additional layer 80, which needs to be big enough to cover the outer surface 40 of the optical lens 20 above the light source 10 and the light source 10. Said layer 80 is optional; it may be combined with aesthetic purpose and may be designed as wished.

With the surface treatment of the inner surface 30 and the flat surface 41, with the use of the diffusive lens 70 and the non-transparent layer 80, the light diffusion of the optical system and the homogeneity of the optical system are increased.

The proposed optical system is not limited to the automotive industry only but can be applied for all surfaces which need to be homogeneously illuminated.

### Embodiment

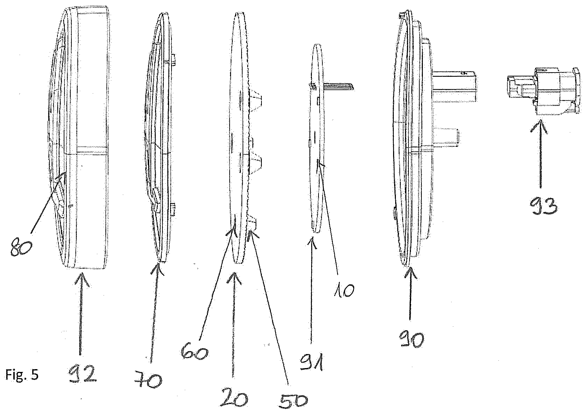

In the presented embodiment on Fig. 5 an optical system for homogenous surface illumination of a logo on a vehicle is described. Based on the dimensions and the design of the logo to illuminate the whole surface, the optical system was defined.

The optical system is composed of an optical lens 20 and four light sources 10 - LEDs, wherein the position of four LEDs is defined so that they are hidden behind the black surface on the cover lens 92, wherein said black surface is a non-transparent layer 80.

The optical lens 20 has a diameter of approximately 96 mm, its thickness is uniform across its entire surface and is approximately 2,1 mm. Four in-coupling elements 50 are integrated on the inner surface of the optical lens and are of height of approximately 8 mm. They are positioned above the LEDs. Four recesses 60 are formed on the outer surfaces of the optical lens so that the centers of the recesses 60, the in-coupling elements 50 and the LEDs 10 are located on the same optical axis X. The inner surface of the optical lens, apart the surface where the in-coupling elements are integrated on its inner surface, is formed of spherical elements and flat surfaces, which are arranged in a mesh of size 2mm x 2 mm. Spherical elements are of convex shape and are of the same height (approximately 0.4 mm) and radius (approximately 0,938 mm). The flat surfaces are of the same length (approximately 0.124 mm).

The logo with the optical system is integrated into the housing 90. Four LEDs 10 are attached on PCB 91 in previously defined places. The PCB 91 is screwed to the housing 90. Optical lens 20 is positioned above the PCB 91, so that in-coupling elements 50 are positioned above the LEDs. On optical lens 20 a diffusive lens 70 is placed and over the diffusive lens 70 the cover lens 92 is placed and is fixedly connected to the housing 90. The PCB 91 and thus LEDs is through the connector 93 connected to the power supply of the vehicle.

## Claims

1. An optical system for homogenous surface illumination, wherein said system comprises
- at least one light source (10) and
- an optical lens (20) with an inner surface (30) and an outer surface (40), wherein said optical lens (20) comprises at least one in-coupling element (50) which is positioned above said at least one light source (10) and is integrated in said optical lens (20) on its inner surface (30), wherein
said outer surface (40) is formed as a predominantly flat surface (41) with at least one recess (60), which is located above said at least one in-coupling element (50) and wherein a lateral surface (61) of the recess (60) forms a first reflective surface,
the inner surface (30) of the optical lens (20), apart the surface where the in-coupling element (50) is integrated on the inner surface (30), is formed of spherical elements (31), which are separated one from another by flat surfaces (32),
wherein said flat surface 41 and the surfaces of the spherical elements 31 and the flat surfaces 32 form further reflective surfaces, wherein part of the light hitting the flat surface (41) passes through the flat surface (41) into the exterior of the lens,
wherein the centers of the at least one recess (60), the at least one in-coupling element (50) and the at least one light source (10) are located on the same optical axis X and wherein
the flat surface (41) and the flat surfaces (32) are predominantly parallel to one another.

2. The optical system according to claim 1 wherein the in-coupling element (50) is in a form of a truncated cone, with a cavity (51) at the bottom part of the in-coupling element (50), wherein the cavity (51) is symmetrical with respect to the optical axis X and is in a form of a truncated cone with an upper inner surface (53) in the form of a convex surface and with an inner side surface (52) slightly inclined inwardly relative to the optical axis X with and an outer surface (54) of the in-coupling element (50) is formed convexly.

3. The optical system according to claim 1 wherein the recess (60) is symmetrical with respect to the optical axis X and has a circular shape in a B-B plane cross section.

4. The optical system according to claim 3 wherein the recess (60) is, in A-A plane cross section, essentially of a triangular shape, wherein two sides of said shape, which face in interior of the optical lens (20), may be inwardly or outwardly bent.

5. The optical system according to claim 3 wherein the recess (60) is, in A-A plane cross section, of a triangular shape with straight sides.

6. The optical system according to claim 1 wherein the size of the lateral surface (61) of the recess (60) depends on a depth (H) and a diameter (D) of the recess (60) at the outer surface (40) of the optical lens (20) and is defined in each case according to the in-coupling element/s (50) used and/or according to the dimensions and the shape of the object to be homogeneously illuminated.

7. The optical system according to claim 1 wherein the spherical elements (31) are in a form of convex or concave shape of sphere, wherein a height (H1) and a radius (R) of each of the spherical elements (31) is the same or different along the inner surface (30) of the optical lens (20).

8. The optical system according to claim 1 wherein the distance between the individual spherical elements (31), i.e. a length (L) of the flat surfaces (32), is the same or different along the inner surface (30) of the optical lens (20).

9. The optical system according to claim 1 wherein the inner surface (30) of the optical lens (20) is formed of spherical elements (31) of convex shape and of flat surfaces (32) which separate spherical elements (31) one from another, wherein the spherical elements (31) are of the same height (H1) and radius (R) and wherein the flat surfaces (32) are of the same length (L), along the inner surface (30) of the optical lens (20).

10. The optical system according to claim 1 wherein the inner surface (30) of the optical lens (20) is formed of spherical elements (31) of convex shape and of flat surfaces (32) which separate spherical elements (31) one from another, wherein the height (H1) and the radius (R) of the spherical elements (31) increases along the inner surface (30) of the optical lens (20) with the distance of the spherical elements (31) from the in-coupling elements (50) and wherein the length (L) of the flat surfaces (31) decreases along the inner surface (30) of the optical lens (20) with the distance of the spherical elements (31) from the in-coupling elements (50).

11. The optical system according to claim 1 wherein the inner surface (30) of the optical lens (20), apart the outer side surface (54) of the in-coupling element/s (50), is optionally surface treated, for example by metallization or graining.

12. The optical system according to claim 1 wherein the flat surface (41) optionally includes additional optical elements, for example optical prisms, pillows or similar elements for controlled spread of the light, or the flat surface (41) is optionally surface treated.

13. The optical system according to claim 1 wherein the optical system optionally includes a diffusive lens (70) placed above the optical lens (20).

14. The optical system according to claim 1 wherein the optical system optionally includes a non-transparent layer (80), which is shaped and positioned above the outer surface (40) of the optical lens (20) in places to prevent direct visibility of the light source (10).

15. The optical system according to claim 1 wherein the light sources (10) and thus the in-coupling elements (50) and recesses (60) are arranged symmetrically or asymmetrically throughout the entire surface of the optical lens (20).
